# EUROPÄISCHE PATENTSCHRIFT

(11) **EP 1 408 361 B1**
(45) Veröffentlichungstag und Bekanntmachung des Hinweises auf die Patenterteilung: **16.11.2005**
(21) Anmeldenummer: 03021789.7
(22) Anmeldetag: 26.09.2003
(51) Int. Cl.: G02B 21/00

(54) **Polarisationsinterferenzmikroskop**
Polarizing interference microscope
Microscope interférentiel à polarisation

(30) Priorität: 10.10.2002 DE 10247248
(43) Veröffentlichungstag der Anmeldung: 14.04.2004
(73) Patentinhaber: Leica Microsystems Wetzlar GmbH, 35578 Wetzlar (DE)
(72) Erfinder: Krüger, Ralf, 35510 Butzbach/Griedel (DE)
(74) Vertreter: Reichert, Werner Franz

(56) Entgegenhaltungen:
- US-A- 2 601 175
- US-A- 2 924 142
- US-A- 5 521 705

## Beschreibung

Die Erfindung betrifft ein Polarisations-Interferenzmikroskop mit einer Lichtquelle, einem Polarisator, einem Analysator und einem zwischen dem Polarisator und dem Analysator angeordneten Objektivprisma.

Bei der mikroskopischen Untersuchung von Objekten werden Mikroskope unterschiedlicher Art eingesetzt, die für den jeweiligen Anwendungszweck geeignet sind. Zur Untersuchung ungefärbter, transparenter Objekte im Durchlicht können Mikroskope eingesetzt werden, die nach der Methode des differentiellen Interferenzkontrastes arbeiten. Grundsätzlich werden bei derartigen Mikroskopen Höhenunterschiede im Objekt dadurch dargestellt, dass eine ebene Welle von der Objektstruktur in ihrer Phase moduliert wird. Diese modulierte Welle wird dann mit einem unbeeinflussten Referenzstrahl zur Interferenz gebracht. Das dabei entstehende Muster erlaubt die quantitative Bestimmung von Gangunterschieden im Objekt. Die Gangunterschiede können bei diesem Verfahren auch in ein plastisches oder farbkontrastiertes Bild umgewandelt werden.

Neben der Möglichkeit, ein Bild aus der Interferenz der modulierten Welle mit einem unbeeinflussten Referenzstrahl zu bilden, besteht auch die Möglichkeit, ein Bild mit dem sogenannten differenziellen Interferenzkontrast (DIC) zu erzeugen. Höhenunterschiede und materialabhängige Phasenveränderungen an der Oberfläche des Objektes können mit dieser Methode kontrastreich dargestellt werden. Im Gegensatz zur Interferenzkontrastmethode wird beim Verfahren nach dem differenziellen Interferenzkontrast die modulierte Welle nicht mit einem unbeeinflussten Referenzstrahl zur Interferenz gebracht, sondern mit einer lateral versetzten phasenmodulierten Objektwelle selbst. Damit gehen bei der Methode nach dem differenziellen Interferenzkontrast die Differenzwerte an benachbarten Objektpunkten in die Bilderzeugung ein. Somit werden nur solche Objektdetails sichtbar gemacht, in deren unmittelbarer Umgebung ein Brechzahl- oder Dickengradient vorhanden ist, der sich ausreichend durch eine Interferenz benachbarter Wellen darstellen lässt.

Ein Mikroskop, das den oben genannten differenziellen Interferenzkontrast nutzt, ist beispielsweise aus der DE 2401973 und der US PS2,601,175 bekannt. Dabei wird linear polarisiertes Licht durch ein Kondensorprisma in zwei senkrecht zueinander polarisierte Teilstrahlen aufgespaltet, die parallel zueinander versetzt sind. Die beiden Teilstrahlen passieren das Objekt entsprechend an unterschiedlichen Stellen und werden mit Hilfe eines nach dem Objekt angeordneten Objektivprismas wieder zusammengeführt. Ein anschließend im Strahlengang angeordneter Analysator bringt die beiden Teilstrahlen zur Interferenz. Auf diese Weise lassen sich Unterschiede in der optischen Weglänge, die auf Höhenunterschiede oder materialabhängige Phasenveränderungen zurückzuführen sind, in Intensitätsunterschiede überführen. Mit Hilfe dieser Intensitätsunterschiede lässt sich dann ein scharfes Bild des Objektes erzeugen.

Die US 2,924,142 offenbart ein Polarisations-Interferenzmikroskop mit einer Lichtquelle, einem Kondensor, einem Polarisator, einem Objektiv, einem Objektivprisma und einem Analysator. In einer ersten Variante des Mikoskops ist die Lichtquelle, mit einer Schlitzblende versehen, die somit nur mittennahe Strahlen zulässt. Daher wird auch nur die Doppelbrechung in der Mitte des Objektivprismas betrachtet. Es wird ein Kompensator auf der Objektivseite angegeben, der die Doppelbrechung in der Mitte des Objektivprismas kompensiert. In weiteren Varianten wird als Beleuchtung nicht nur ein Schlitz, sondern die gesamte Strahlapertur genutzt. Um dies zu ermöglichen, wird jeweils auf der Kondensorseite ein Kompensationselement K verwendet, das ebenfalls die Doppelbrechung in der Mitte des Objektivprismas zu Null kompensiert. Die Wirkung der Phasenlagen von Teilstrahlen an den doppelbrechenden Elementen auf die Bildqualität wird nicht angesprochen.

Grundsätzlich kann dieses Verfahren auch ohne das Kondensorprisma durchgeführt werden. Allerdings ist das Kondensorprisma erforderlich, um ein brillantes Bild erzeugen zu können, wobei das Kondensorprisma als sogenanntes Kompensationsprisma wirkt, mit dessen Hilfe Gangunterschieddifferenzen des Objektivprismas aufgrund der beiden Prismenteile kompensiert werden können.

Aus der US-PS 3,563,629 ist bereits bekannt, dass der Einsatz von polarisiertem Licht bei diesem Abbildungsverfahren zu Schwierigkeiten führt, die nur dadurch gelöst werden können, dass die Beleuchtungsapertur deutlich verkleinert werden muss. Entsprechend muss beim Einsatz eines derartigen Mikroskops für jede Pupillenlage ein entsprechendes Prisma entwickelt werden, was zu hohen Kosten für die Bereitstellung entsprechender Mikroskope führt.

Aufgabe der vorliegenden Erfindung ist es daher, ein Polarisations-Interferenzmikroskop vorzuschlagen, das unabhängig von der Pupillenlage eingesetzt werden kann.

Erfindungsgemäß wird diese Aufgabe durch ein Polarisations-Interferenzmikroskop mit den Merkmalen gemäß Anspruch 1 gelöst. Demnach wird also zwischen gekreuzten Polarisatoren ein doppelbrechendes Element eingefügt, das die optischen Wellenlängendifferenzen der Teilstrahlen über den Durchmesser des Objektivprismas kompensiert.

Die Einführung dieses Kompensationselementes kann sowohl bei Mikroskopen verwendet werden, die im Durchlicht arbeiten, wie auch bei Mikroskopen, die das Auflichtverfahren verwenden. Der besondere Vorteil bei Durchlichtmikroskopen besteht darin, dass die Pupillenlage des Objektivs keinen Einfluss mehr auf die Abbildungsqualität hat. Das Einsetzen des doppelbrechenden Kompensationselementes stellt somit ein Mikroskop zur Verfügung, das unabhängig von der Pupillenlage, eine gute Abbildungsqualität gewährleistet. Somit können auch Objektive eingesetzt werden, die große Pupillenaberrationen, wie beispielsweise im Übersichtsbereich haben. Darüber hinaus kann auf der Kondensorseite vollständig auf das Kondensorprisma verzichtet werden.

Auch für Auflichtmikroskope besteht der Vorteil des Einsatzes des doppelbrechenden Kompensationselementes darin, dass diese nun unabhängig von der Pupillenlage verwendet werden können. Außerdem werden Reflexe der 1. Ordnung besser diskriminiert.

Weitere Vorteile und vorteilhafte Ausführungsformen der Erfindung sind Gegenstand der nachfolgenden Figuren sowie deren Beschreibungen, bei deren Darstellung zugunsten der Übersichtlichkeit auf eine maßstabsgetreue Wiedergabe verzichtet wurde.

Es zeigen im Einzelnen:
- ***Fig. 1:***: den Strahlengang innerhalb eines Durchlicht-Polarisations-Interferenzmikroskopes beim Einsatz des differenziellen Interferenzkontrastes nach dem Stand der Technik,
- ***Fig. 2 a, b:***: eine Veranschaulichung der Verhältnisse, beim Durchgang eines Lichtstrahls durch ein Prisma nach dem Stand der Technik,
- ***Fig. 3:***: den Strahlengang durch ein erfindungsgemäßes Polarisations-Interferenzmikroskop im Durchlicht,
- ***Fig. 4:***: den Strahlengang durch ein erfindungsgemäßes Polarisations-Interferenzmikroskop im Auflicht,

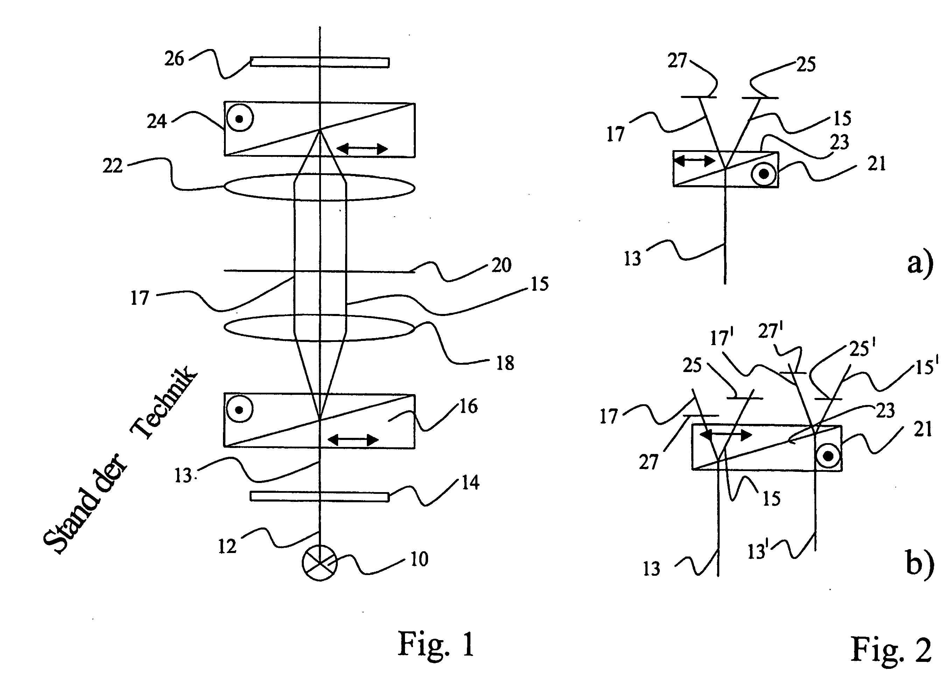

***Fig. 1*** zeigt in einer schematischen Darstellung den Strahlengang eines Interferenz-Polarisationsmikroskops gemäß dem Stand der Technik. Von einer Lichtquelle 10 wird ein Lichtstrahl 12 erzeugt, der durch einen Polarisator 14 geführt wird. Der aus dem Polarisator 14 austretende Lichtstrahl 13 ist dann linear polarisiert und wird von einem Kondensorprisma 16 in zwei senkrecht zueinander polarisierte Teilstrahlen 15, 17 aufgespaltet. Die beiden Teilstrahlen 15,17 gelangen über einen Kondensor 18 parallel versetzt zueinander auf ein Objekt 20. Im Objekt 20 wird jeder der Teilstrahlen 15, 17 individuell entsprechend der jeweils vorherrschenden lokalen Objekteigenschaften moduliert.

Die parallel zueinander versetzten Teilstrahlen 15, 17 werden anschließend durch das Objektiv 22 vereint und passieren dann das Objektivprisma 24. Der hinter dem Objektivprisma 24 angeordnete Analysator 26 bringt die beiden Teilstrahlen wieder zur Interferenz. Unterschiede in den optischen Weglängen, die durch die Wechselwirkung mit dem Objekt 20 entstehen, werden auf diese Weise in Intensitätsunterschiede übergeführt.

Grundsätzlich funktioniert dieser, aus dem Stand der Technik bereits bekannte differenzielle Interferenzkontrast auch ohne das Kondensorprisma 16. Hierzu muss allerdings die Kondensorapertur in Form eines schmalen Schlitzes gestaltet werden. Dadurch kann der gewünschte Kontrasteffekt lediglich durch den Einsatz des Objektivprismas 24 erreicht werden. Dies schränkt allerdings die Apertur ein. Um ein brilliantes Bild erzeugen zu können, ist es somit erforderlich, auch auf der Kondensorseite das Kondensorprisma 16, ein sogenanntes Kompensationsprisma, einzusetzen. Denn nur damit lassen sich die Gangunterschieddifferenzen des Objektivprismas 24, die aufgrund der beiden Prismenkeile entstehen, kompensieren. Aus diesem Grunde kann das Objektivprisma 24 auch als Hauptprisma und das Kondensorprisma 16 als Kompensationsprisma bezeichnet werden.

Die Verhältnisse beim Durchgang eines linear polarisierten Lichtstrahls 13 durch ein Prisma 21, das beispielsweise ein Haupt- oder Kompensationsprisma sein kann, sind in den ***Figuren 2a*** und ***2b*** dargestellt. In ***Figur 2a*** läuft der linear polarisierte Lichtstrahl 13 durch die Mitte des Prismas 21. Der eintretende Lichtstrahl 13 wird an der verkitteten Keilfläche 23 aufgespalten. Wegen der Gleichheit der Dicken der Keile weisen die beiden Teilstrahlen 15, 17 hinter dem Prisma keinen Gangunterschied auf. Veranschaulicht ist dies in der Skizze durch die beiden horizontalen Linien 25 und 27, die in diesem Falle auf gleicher Ebene liegen.

In ***Figur 2b*** ist die Situation für zwei linear polarisierte Strahlen 13, 13' wiedergegeben, die außermittig auf das Prisma 21 auftreffen. Der Strahl 13 trifft wiederum auf die Keilfläche 23. Da jedoch die Dicke der beiden Keile des Prismas 21 unterschiedlich ist, entsteht zwischen den Teilstrahlen 15 und 17 ein positiver Gangunterschied, was wiederum durch die Linien 25 und 27 angedeutet ist. Bei dem, auf der gegenüberliegenden Seite des Prismas 21 auftreffenden linear polarisierten Lichtstrahls 13' entsteht entsprechend ein negativer Gangunterschied zwischen den beiden Teilstrahlen 15' und 17' was durch die Linien 27' und 25' angedeutet ist. Üblicherweise ist es daher erforderlich, diese Gangunterschiede durch den Einsatz eines zweiten Prismas zu kompensieren.

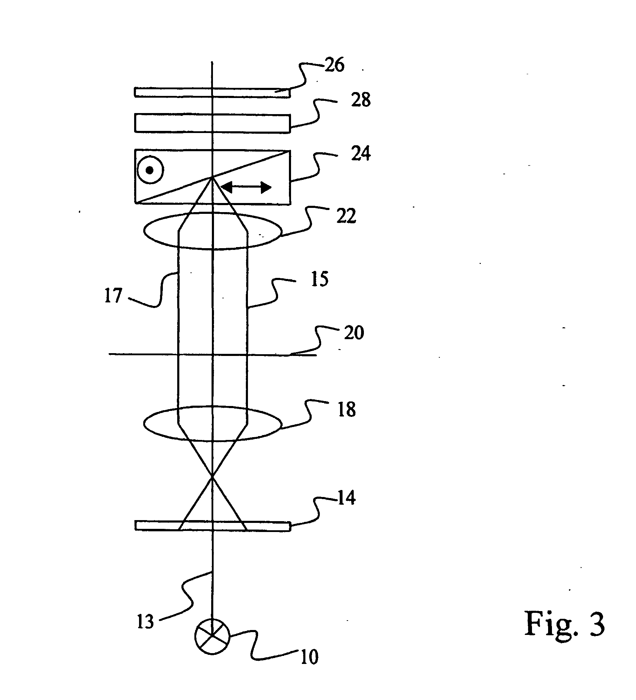

Um nun den Einsatz eines zweiten Prismas, des sogenannten Kompensationsprismas, zu vermeiden, wird erfindungsgemäß vorgeschlagen, im Strahlengang ein zusätzliches doppelbrechendes Kompensationselement 28 vorzusehen. Ein Beispiel für eine derartige Anordnung ist in ***Figur 3*** gezeigt. Zwischen den gekreuzten Polarisatoren 14, 26 wird hier ein doppelbrechendes Kompensationselement 28 eingefügt. Das doppelbrechende Kompensationselement 28 ist in der Lage, die optischen Weglängendifferenzen der Teilstrahlen 15, 17 über den gesamten Durchmesser des Prismas 24 zu kompensieren. Vorzugsweise wird hierzu ein Liquid-Crystal-Matrixelement (LCD) eingesetzt. Für eine optimale Funktion ist grundsätzlich entscheidend, dass das Kompensationselement 28 in unmittelbarer Nähe des Objektivprismas (24) angeordnet ist. In der in Figur 3 gezeigten Ausführungsform der Erfindung wird das doppelbrechende Kompensationselement 28 zwischen dem Analysator 26 und dem Objektivprisma 24 eingesetzt. Alternativ ist es ebenso möglich, das doppelbrechende Kompensationselement 28 zwischen dem Objektivprisma 24 und dem Objektiv (22) anzusetzen.

Mit dem Einsatz des doppelbrechenden Kompensationselementes 28 ist die Anordnung im Durchlicht unabhängig von der Pupillenlage der Objektive, so dass es nicht mehr erforderlich ist, für jede Pupillenlage ein entsprechendes Prisma zu entwickeln. Damit können auch Objektive eingesetzt werden, die große Pupillenaberrationen aufweisen, wie sie typischerweise im Übersichtsbereich auftreten. Entsprechend ist es auch nicht mehr nötig, für jeden Vergrößerungsbereich auf der Kondensorseite ein Kompensationsprisma vorzusehen.

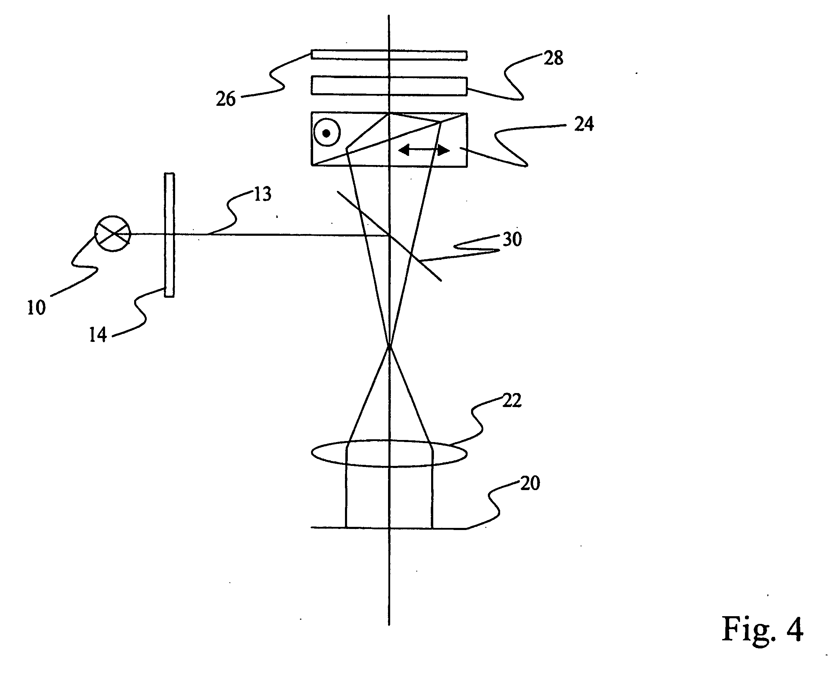

Erfindungsgemäß lässt sich das doppelbrechende Kompensationselement 28 auch in einem Mikroskop einsetzen, das im Auflichtbetrieb arbeitet. Ein Beispiel hierfür ist in Figur 4 schematisch dargestellt. Der von einer Lichtquelle 10 kommende Lichtstrahl 13 wird in einem Polarisator 14 linear polarisiert und über einen teildurchlässigen Spiegel 30 durch das Objektiv 22 hindurch auf das Objekt 20 geführt. Die von dort reflektierte Strahlung tritt durch den teildurchlässigen Spiegel 30 hindurch und gelangt über das Objektivprisma 24 zum Analysator 26. Wiederum ist zwischen dem Analysator 26 und dem Objektivprisma 24 ein doppelbrechendes Kompensationselement 28 angeordnet, das die optischen Wellenlängendifferenzen der Teilstrahlen über den Durchmesser des Prismas kompensiert. Wiederum wird dabei vorzugsweise ein Liquid-Crystal-Matrixelement eingesetzt. Das doppelbrechende Kompensationselement macht die Anordnung unabhängig von der Pupillenlage und diskriminiert darüber hinaus die Reflexe erster Ordnung besser.

### Bezugszeichenliste

- 10: Lichtquelle
- 12: Lichtstrahl
- 13: polarisierter Lichtstrahl
- 14: Polarisator
- 15: Teilstrahl
- 16: Kondensorprisma
- 17: Teilstrahl
- 18: Kondensor
- 20: Objekt
- 21: Prisma
- 22: Objektiv
- 23: Keilfläche
- 24: Objektivprisma
- 25: Linie
- 26: Analysator
- 27: Linie
- 28: doppelbrechendes Kompensationselement
- 30: teildurchlässiger Spiegel

## Patentansprüche

1. Polarisations-Interferenzmikroskop
- in dem nach einer Lichtstrahlen aussendenden Lichtquelle (10) und vor einem abzubildenden Objekt (20) ein Polarisator (14) und ein Kondensor (18) angeordnet sind,
- und in dem nach dem Objekt (20) nacheinander ein Objektiv (22), ein Objektivprisma (24) und ein Analysator (26) angeordnet sind,
- und wobei für außermittig auf das Objektivprisma (24) auftreffende Lichtstrahlen die jeweils im Objektivprisma (24) entstehenden Teil - strahlen (15, 17; 15',17') hinter dem Objektivprisma (24) verschiedene optische Weglängendifferenzen aufweisen,
**dadurch gekennzeichnet,**
**dass** in unmittelbarer Nähe des Objektivprismas (24) ein doppelbrechendes Kompensationselement (28) angeordnet ist, das die unterschiedlichen optischen Weglängendifferenzen der Teilstrahlen (15, 17; 15',17') über den Durchmesser des Objektivprismas (24) kompensiert, wodurch ein Einsatz eines Kompensationsprismas auf der Kondensorseite vermieden wird.

2. Polarisations-Interferenzmikroskop nach Anspruch 1, **dadurch gekennzeichnet, dass** das doppelbrechende Kompensationselement (28) zwischen dem Analysator (26) und dem Objektivprisma (24) angeordnet ist.

3. Polarisations-Interferenzmikroskop nach Anspruch 1, **dadurch gekennzeichnet, dass** das doppelbrechende Kompensationselement (28) zwischen dem Objektivprisma (24) und dem Objektiv (2) angeordnet ist.

4. Polarisations-Interferenzmikroskop nach einem der Ansprüche 1 bis 3, **dadurch gekennzeichnet, dass** das doppelbrechende Kompensationselement (28) ein Liquid-Crystal-Matrixelement ist.

5. Polarisations-Interferenzmikroskop nach einem der Ansprüche 1 bis 4, **dadurch gekennzeichnet, dass** das Polarisationsinterferenzmikroskop ein Durchlichtmikroskop ist.

6. Polarisations-Interferenzmikroskop nach einem der Ansprüche 1 bis 4, **dadurch gekennzeichnet, dass** das Polarisationsinterferenzmikroskop ein Auflichtmikroskop ist.

## Claims

1. Polarizing interference microscope
- in which a polarizer (14) and a condenser (18) are arranged downstream of a light source (10) emitting light beams and upstream of an object (20) to be imaged,
- and in which an objective (22), an objective prism (24) and an analyzer (26) are arranged one after another downstream of the object (20),
- and wherein for light beams impinging eccentrically on the objective prism (24) the component beams (15, 17; 15', 17') which respectively arise in the objective prism (24) exhibit different optical path length differences downstream of the objective prism (24),
**characterized**
**in that** arranged in the immediate vicinity of the objective prism (24) is a birefringent compensation element (28) which compensates the different optical path length differences of the component beams (15, 17', 15', 17') over the diameter of the objective prism (24), the result being to avoid using a compensation prism on the condenser side.

2. Polarizing interference microscope according to Claim 1, **characterized in that** the birefringent compensation element (28) is arranged between the analyzer (26) and the objective prism (24).

3. Polarizing interference microscope according to Claim 1, **characterized in that** the birefringent compensation element (28) is arranged between the objective prism (24) and the objective (2).

4. Polarizing interference microscope according to one of Claims 1 to 3, **characterized in that** the birefringent compensation element (28) is a liquid crystal matrix element.

5. Polarizing interference microscope according to one of Claims 1 to 4, **characterized in that** the polarizing interference microscope is a transmitted-light microscope.

6. Polarizing interference microscope according to one of Claims 1 to 4, **characterized in that** the polarizing interference microscope is an incident-light microscope.

## Revendications

1. Microscope interférentiel à polarisation,
- dans lequel un polarisateur (14) et un condenseur (18) sont disposés après une source de lumière (10) émettant des rayons lumineux et avant un objet à représenter (20), et
- dans lequel un objectif (22), un prisme d'objectif (24) et un analyseur (26) sont disposés successivement après l'objet (20), et
- pour des rayons lumineux incidents de façon excentrée sur le prisme d'objectif (24), les rayons partiels (15, 17 ; 15', 17') créés respectivement dans le prisme d'objectif (24) présentant des différences de chemin optique variables derrière le prisme d'objectif (24),
**caractérisé en ce qu'**à proximité immédiate du prisme d'objectif (24), un élément de compensation biréfringent (28) est disposé qui compense les différences de chemin optique variables des rayons partiels (15, 17 ; 15', 17') par l'intermédiaire du diamètre du prisme d'objectif (24), ce qui permet d'éviter la mise en oeuvre d'un prisme de compensation du côté du condenseur.

2. Microscope interférentiel à polarisation selon la revendication 1, **caractérisé en ce que** l'élément de compensation biréfringent (28) est disposé entre l'analyseur (26) et le prisme d'objectif (24).

3. Microscope interférentiel à polarisation selon la revendication 1, **caractérisé en ce que** l'élément de compensation biréfringent (28) est disposé entre le prisme d'objectif (24) et l'objectif (2).

4. Microscope interférentiel à polarisation selon l'une quelconque des revendications 1 à 3, **caractérisé en ce que** l'élément de compensation biréfringent (28) est un élément matriciel à cristaux liquides.

5. Microscope interférentiel à polarisation selon l'une quelconque des revendications 1 à 4, **caractérisé en ce que** le microscope interférentiel à polarisation est un microscope à lumière transmise.

6. Microscope interférentiel à polarisation selon l'une quelconque des revendications 1 à 4, **caractérisé en ce que** le microscope interférentiel à polarisation est un microscope à lumière réfléchie.
